# EUROPEAN PATENT APPLICATION

(11) **EP 4 737 070 A1**
(43) Date of publication of application: **06.05.2026**
(21) Application number: 24876237.9
(22) Date of filing: 13.08.2024
(51) Int. Cl.: B25J 9/16, B23K 37/00, B23K 31/02, B23K 101/36

(54) **HUMAN-COMPUTER INTERACTION CONTROL METHOD AND SYSTEM FOR WELDING**

(30) Priority: 08.10.2023 CN 202311289736
(71) Applicant: Contemporary Amperex Technology Co., Limited, Ningde, Fujian 352100 (CN)
(72) Inventor: WU, Kai, Ningde, Fujian 352100 (CN); MA, Yuhang, Ningde, Fujian 352100 (CN); ZHAO, Jun, Ningde, Fujian 352100 (CN); XIE, Wenjie, Ningde, Fujian 352100 (CN)
(74) Representative: Ran, Handong
(86) International application number: PCT/CN2024/111838
(87) International publication number: WO 2025/077417

(57) **Abstract**

Disclosed in embodiments of the present disclosure are a human-computer interaction control method and system for welding. The human-computer interaction control method for welding comprises: in response to triggering of a scheme switching control on a main menu bar, displaying a scheme switching interface on a human-computer interaction device; on the basis of a scheme uploading selection box, determining, from a scheme uploading library, a target scheme to be uploaded, and displaying an identifier of said target scheme in the scheme uploading selection box; when said target scheme has been determined and a scheme uploading control has been enabled, updating a current scheme corresponding to the current scheme selection box and displaying same as said target scheme; and on the basis of working parameters of said target scheme, controlling a battery welding process device to perform welding work on a current battery to be welded. In this way, the effect of flexibly switching schemes can be achieved.

## Description

### CROSS-REFERENCE TO RELATED APPLICATION

The present disclosure is filed on the basis of and claims priority to Chinese Patent Application No. 202311289736.0, entitled "HUMAN-COMPUTER INTERACTION CONTROL METHOD AND SYSTEM FOR WELDING" and filed on October 08, 2023, which is incorporated herein by reference in its entirety.

### TECHNICAL FIELD

The present disclosure relates to, but is not limited to, the field of human-computer interaction control technology, and particularly to a human-computer interaction control method and system for welding.

### BACKGROUND

During the production process of battery cell modules, busbar welding is required, that is, a plurality of battery cells are connected together through busbar welding to form a battery cell module. Due to the differences in battery module types and welding processes, busbar welding involves many welding scheme parameters. Therefore, there is an urgent need for a method that can centrally manage the scheme parameters required for various types of welding, so as to achieve the effect of flexible switching of production compatible with various products.

### SUMMARY OF THE INVENTION

In view of this, embodiments of the present disclosure at least provide a human-computer interaction control method and system for welding, which can solve the problem that related technologies can not achieve flexible switching of production compatible with various products.

Technical solutions of the embodiments of the present disclosure are implemented as follows:
In one aspect, an embodiment of the present disclosure provides a human-computer interaction control method for welding, the human-computer interaction control method for welding comprising:
in response to triggering of a scheme switching control on a main menu bar, displaying a scheme switching interface on a human-computer interaction device, wherein the scheme switching interface comprises a scheme uploading control, a scheme uploading selection box, and a current scheme selection box; on the basis of the scheme uploading selection box, determining, from a scheme uploading library, a target scheme to be uploaded, and displaying an identifier of the target scheme to be uploaded in the scheme uploading selection box; when the target scheme to be uploaded has been determined and the scheme uploading control has been enabled, updating a current scheme corresponding to the current scheme selection box and displaying same as the target scheme; and on the basis of working parameters of the target scheme, controlling a battery welding process device to perform welding work on a current battery to be welded.

In another aspect, an embodiment of the present disclosure provides a human-computer interaction control system for welding, and the human-computer interaction control system for welding comprises: a control device, used for executing some or all of the steps in the above-mentioned human-computer interaction control method for welding; a human-computer interaction device, used for displaying a human-computer interaction interface; and a battery welding process device, used for implementing measurement and welding operations on a battery to be welded.

In an embodiment of the present disclosure, during the battery welding process, when the welding scheme needs to be changed, a target scheme to be uploaded can be selected from a scheme uploading library through a scheme uploading selection box, and when the target scheme to be uploaded has been determined and the scheme uploading control has been enabled, the current scheme corresponding to the current scheme selection box is updated and displayed as the target scheme; finally, on the basis of working parameters of the target scheme, the battery welding process device is controlled to perform welding work on a current battery to be welded. In this way, after the current battery to be welded is replaced, on the basis of the scheme switching interface on the human-computer interaction device, it is possible to switch to a welding scheme corresponding to the replaced current battery to be welded, and on the basis of the welding scheme, the replaced current battery to be welded is welded, thereby achieving the effect of flexible switching of schemes and solving the problem that related technologies can not achieve flexible switching of production compatible with various products; and after the target scheme to be uploaded is determined, an identifier of the target scheme to be uploaded can be displayed in the scheme uploading selection box, so that it is possible to confirm again whether the target scheme to be uploaded is correct, thereby reducing the problem of selecting the wrong scheme due to misoperation.

It should be understood that the foregoing general descriptions and the following detailed descriptions are merely for illustration and explanation purposes and are not intended to limit the technical solutions of the present disclosure.

### DESCRIPTION OF DRAWINGSINGS

The accompanying drawings herein are incorporated into the description and constitute part of the description, illustrate the embodiments conforming to the present disclosure, and are intended to explain the technical solutions of the present disclosure together with the description.
FIG. 1 is a first schematic flowchart of implementing a human-computer interaction control method for welding provided in an embodiment of the present disclosure;
FIG. 2 is a first schematic diagram of the interface of a human-computer interaction interface for welding provided in an embodiment of the present disclosure;
FIG. 3 is a second schematic flowchart of implementing a human-computer interaction control method for welding provided in an embodiment of the present disclosure;
FIG. 4 is a second schematic diagram of the interface of a human-computer interaction interface for welding provided in an embodiment of the present disclosure;
FIG. 5 is a third schematic diagram of the interface of a human-computer interaction interface for welding provided in an embodiment of the present disclosure;
FIG. 6 is a fourth schematic diagram of the interface of a human-computer interaction interface for welding provided in an embodiment of the present disclosure;
FIG. 7 is a fifth schematic diagram of the interface of a human-computer interaction interface for welding provided in an embodiment of the present disclosure;
FIG. 8 is a sixth schematic diagram of the interface of a human-computer interaction interface for welding provided in an embodiment of the present disclosure;
FIG. 9 is a seventh schematic diagram of the interface of a human-computer interaction interface for welding provided in an embodiment of the present disclosure;
FIG. 10 is an eighth schematic diagram of the interface of a human-computer interaction interface for welding provided in an embodiment of the present disclosure;
FIG. 11 is a ninth schematic diagram of the interface of a human-computer interaction interface for welding provided in an embodiment of the present disclosure;
FIG. 12 is a tenth schematic diagram of the interface of a human-computer interaction interface for welding provided in an embodiment of the present disclosure;
FIG. 13 is an eleventh schematic diagram of the interface of a human-computer interaction interface for welding provided in an embodiment of the present disclosure;
FIG. 14 is a twelfth schematic diagram of the interface of a human-computer interaction interface for welding provided in an embodiment of the present disclosure;
FIG. 15 is a third schematic flowchart of implementing a human-computer interaction control method for welding provided in an embodiment of the present disclosure;
FIG. 16 is a thirteenth schematic diagram of the interface of a human-computer interaction interface for welding provided in an embodiment of the present disclosure;
FIG. 17 is a fourth schematic flowchart of implementing a human-computer interaction control method for welding provided in an embodiment of the present disclosure;
FIG. 18 is a fourteenth schematic diagram of the interface of a human-computer interaction interface for welding provided in an embodiment of the present disclosure;
FIG. 19 is a fifteenth schematic diagram of the interface of a human-computer interaction interface for welding provided in an embodiment of the present disclosure;
FIG. 20 is a schematic diagram of a composition structure of a human-computer interaction control system for welding provided in an embodiment of the present disclosure;
FIG. 21 is a schematic diagram of a composition structure of a battery welding process device provided in an embodiment of the present disclosure.

### DETAILED DESCRIPTION

In order to make the objects, technical solutions and advantages of the present application clearer, the technical solutions of the present application are further elaborated in detail below in combination with the accompanying drawings and embodiments, the described embodiments should not be regarded as limitations of the present application, and all other embodiments obtained by those of ordinary skills in the art without making creative efforts fall within the protection scope of the present application.

In the following description, the term "some embodiments" describes subsets of all possible embodiments, but it can be understood that "some embodiments" may be the same subset or different subsets of all possible embodiments, and may be combined with each other without conflict.

The terms "first/second/third" are involved only to differentiate between similar objects and do not represent a particular ordering of objects, and it is to be understood that "first/second/third" may be interchanged in a particular order or sequence where permitted to enable the embodiments of the present application described herein to be implemented in a particular order or sequence.

Unless otherwise defined, all technical and scientific terms used herein have the same meanings as commonly understood by those skilled in the field to which the present application belongs. The terms used herein are merely for the purpose of describing the present application, but are not intended to limit the present application.

An embodiment of the present disclosure provides a human-computer interaction control method for welding, which can be executed by a control device in a human-computer interaction control system for welding.

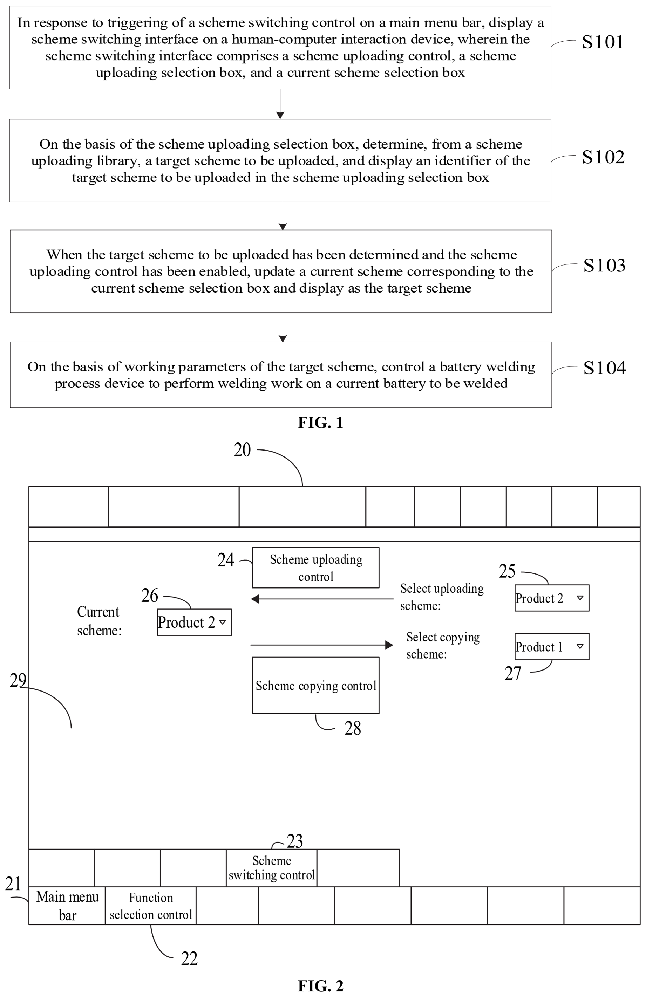

FIG. 1 is a first schematic flowchart of implementing a human-computer interaction control method for welding provided in an embodiment of the present disclosure. As shown in FIG. 1, the method comprises the following step S101 to step S104:
In S101, in response to triggering of a scheme switching control on a main menu bar, a scheme switching interface is displayed on a human-computer interaction device, wherein the scheme switching interface comprises a scheme uploading control, a scheme uploading selection box, and a current scheme selection box.

The scheme uploading control is used for uploading a scheme to be uploaded, the scheme uploading selection box is used for determining the scheme to be uploaded from a scheme uploading library, and the current scheme selection box is used for displaying a scheme currently in use.

In an embodiment of the present disclosure, the triggering of the scheme switching control on the main menu bar can be implemented on the basis of the user's selection operation on the scheme switching control, or can be implemented by the user inputting an instruction to trigger the scheme switching control into the human-computer interaction device. The triggering of other controls in the embodiment of the present disclosure is similar to the triggering of the scheme switching control, so the triggering of other controls can be understood in the same way as described here.

In some embodiments, the scheme switching control may be a main menu control on the main menu bar, or may be a main menu sub-control under the main menu control on the main menu bar.

FIG. 2 is a first schematic diagram of the interface of a human-computer interaction interface for welding provided in an embodiment of the present disclosure. As shown in FIG. 2, a human-computer interaction interface 20 for welding may comprise a main menu bar 21, a function selection control 22, a scheme switching control 23 and a scheme switching interface 29.

The scheme switching interface 29 may comprise a scheme uploading control 24, a scheme uploading selection box 25, and a current scheme selection box 26. The function selection control 22 is a main menu control on the main menu bar 21; the scheme switching control 23 is a main menu sub-control under the function selection control 22. The user may first click the function selection control 22 on the main menu bar 21, and then click the scheme switching control 23 in the sub-main menu bar under the function selection control 22, thereby entering the scheme switching interface 29. The "Product 2" displayed in the scheme uploading selection box 25 represents the identifier of the scheme to be uploaded determined from the scheme uploading library. The "Product 2" displayed in the current scheme selection box 26 indicates that the scheme currently being used is identified as "Product 2".

In an embodiment of the present disclosure, S101 may comprise: in response to triggering of the function selection control on the main menu bar, displaying a plurality of main menu sub-controls; and in response to triggering of the scheme switching control in the plurality of main menu sub-controls, displaying the scheme switching interface on the human-computer interaction device.

In S102, on the basis of the scheme uploading selection box, a target scheme to be uploaded is determined from a scheme uploading library, and an identifier of the target scheme to be uploaded is displayed in the scheme uploading selection box.

In an embodiment of the present disclosure, the scheme uploading library comprises various types of schemes, and different types of schemes can correspond to different types of products and different types of welding processes. The target scheme to be uploaded is the one that the user selects from the scheme uploading library and wishes to switch to for production. That is, the user hopes to use the target scheme to perform welding work on a current battery to be welded.

In an embodiment of the present disclosure, the identifier of the target scheme is a unique identifier of the target scheme, and different schemes can be distinguished by different identifiers. After the target scheme to be uploaded is determined, the identifier of the target scheme to be uploaded may be displayed in the scheme uploading selection box. In an embodiment of the present disclosure, the purpose of displaying an identifier of the target scheme to be uploaded in the scheme uploading selection box is to allow the user to confirm again whether the selected target scheme is the scheme to be switched for production, thereby reducing the phenomenon of switching the scheme to the wrong scheme due to user's misoperation.

Referring to FIG. 2 again, the user can click the scheme uploading selection box 25 and select the identifier of the target scheme on the displayed drop-down menu or floating interface; wherein the drop-down menu or floating interface displays identifiers corresponding to a plurality of schemes in the scheme uploading library. After the identifier of the target scheme is selected, the identifier of the target scheme to be uploaded, i.e., "Product 2", can be displayed in the scheme uploading selection box 25.

In S103, when the target scheme to be uploaded has been determined and the scheme uploading control has been enabled, the current scheme corresponding to the current scheme selection box is updated and displayed as the target scheme.

Here, enabling the scheme uploading control means that the scheme uploading control is triggered and is in an enabled state.

In an embodiment of the present disclosure, the target scheme is a scheme to be used by the battery welding process device later, so that the battery welding process device performs welding work on the battery on the basis of the target scheme.

As shown in FIG. 2, after the user clicks the scheme uploading control 24 (i.e., the scheme uploading control is enabled), the current scheme in the current scheme selection box 26 may be updated and displayed as the target scheme. Exemplarily, if the scheme identifier before the update in the current scheme selection box 26 is "Product 3", then after clicking the scheme uploading control 24 (i.e., the scheme uploading control is enabled), the scheme identifier before the update in the previous scheme selection box 26 can be updated and displayed as "Product 2".

In S104, the battery welding process device is controlled to perform welding work on a current battery to be welded on the basis of working parameters of the target scheme.

Here, the working parameters of the target scheme may be various welding parameters in the battery welding process. In some embodiments, the working parameters of the target scheme may include at least one of the following: the allowable error of accuracy of a sensor, the cleaning parameters of a cleaning device, the allowable error of accuracy of a welding device, and the allowable error of accuracy of a driving device of the welding device.

In an embodiment of the present disclosure, after the current scheme corresponding to the current scheme selection box is switched to the target scheme, the battery welding process device can be controlled on the basis of working parameters of the switched target scheme to perform welding work on a current battery to be welded.

In an embodiment of the present disclosure, on the basis of the scheme switching interface on the human-computer interaction device, the effect of flexible scheme switching can be achieved. Moreover, after determining the target scheme to be uploaded, the identifier of the target scheme to be uploaded can be displayed in the scheme uploading selection box, so that it can be confirmed again whether the target scheme to be uploaded is correct, thereby reducing the problem of selecting the wrong scheme due to misoperation.

In some embodiments, before S102, the method may further comprise: determining a current scheme from a current scheme library on the basis of the current scheme selection box, and displaying an identifier of the current scheme in the current scheme selection box.

In an embodiment of the present disclosure, the current scheme library may be a local scheme library, that is, the current scheme may be determined from the local scheme library. In this way, there is no need to determine the target scheme to be uploaded from the scheme uploading library, which improves the efficiency of determining the current scheme. Furthermore, in the embodiment of the present disclosure, after the current scheme is determined, the identifier of the current scheme may be displayed in the current scheme selection box. This allows the user to confirm again whether the currently selected scheme is the scheme to be switched for production, thereby reducing the phenomenon of switching the scheme to the wrong scheme due to user's misoperation.

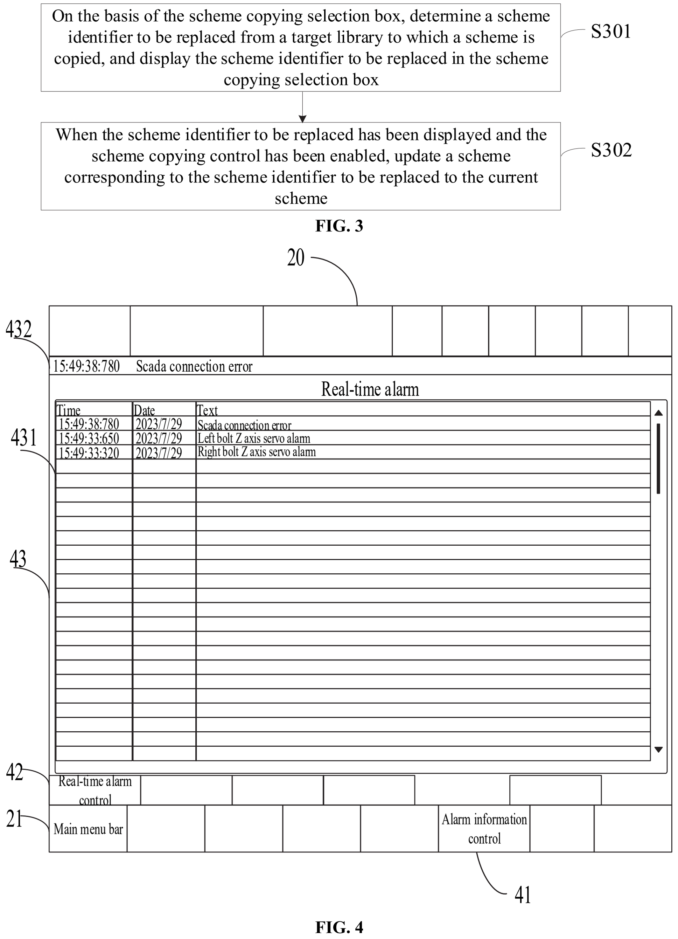

FIG. 3 is a second schematic flowchart of implementing a human-computer interaction control method for welding provided in an embodiment of the present disclosure. The scheme switching interface further comprises a scheme copying control and a scheme copying selection box. Correspondingly, after step S103, as shown in FIG. 3, the method may further comprise S301 to S302:
In S301, on the basis of the scheme copying selection box, a scheme identifier to be replaced is determined from the target library to which the scheme is copied, and the scheme identifier to be replaced is displayed in the scheme copying selection box.

In an embodiment of the present disclosure, the target library is used for storing the scheme copied from the current scheme selection box. When the scheme copying selection box is triggered, a drop-down menu or a floating interface can be displayed, and at least one scheme identifier in the above-mentioned target library can be displayed through the drop-down menu or the floating interface, so as to receive the user's selection operation for the scheme identifier to be replaced, and then determine the scheme identifier to be replaced. That is, the scheme identifier to be replaced may be a scheme identifier that already exists in the target library.

In an embodiment of the present disclosure, when determining the scheme identifier to be replaced, the scheme identifier to be replaced can be displayed in the scheme copying selection box to allow the user to confirm whether the displayed scheme identifier is the correct scheme identifier to be replaced.

In S302, when the scheme identifier to be replaced has been displayed and the scheme copying control has been enabled, a scheme corresponding to the scheme identifier to be replaced is updated to the current scheme.

In an embodiment of the present disclosure, when the scheme identifier to be replaced is displayed, the scheme corresponding to the scheme identifier to be replaced can be updated to the current scheme on the basis of the scheme copying control.

In an embodiment of the present disclosure, updating a scheme corresponding to the scheme identifier to be replaced to the current scheme may mean overwriting the scheme corresponding to the scheme identifier to be replaced with the current scheme. This will have the effect of copying the current scheme to the target library.

As shown in FIG. 2, the scheme switching interface 29 may further comprise a scheme copying selection box 27 and a scheme copying control 28. Exemplarily, the user can click the scheme copying selection box 27 to determine the scheme identifier to be replaced (i.e., product 1) from the displayed drop-down menu or floating interface (not shown), and then click the scheme copying control 28 to update the scheme corresponding to the scheme identifier to be replaced (i.e., product 1) in the current scheme selection box 26 to the scheme corresponding to the current scheme identifier (product 2) in the previous scheme selection box 26, thereby copying the scheme corresponding to product 2 to the target library.

The solution of copying the current scheme in the embodiment of the present disclosure can be performed after uploading the target scheme, and in this case, the copied scheme is the updated current scheme. This allows the updated current scheme to be copied to the target library in a timely manner. In some embodiments, the solution of copying the current scheme may be performed before uploading the target scheme. That is, before the current scheme is updated to and displayed as the target scheme, the current scheme before the update can be copied to the target library. In this way, the scheme before the update can be saved in time to avoid losing the current scheme due to uploading a new scheme.

In an embodiment of the present disclosure, the scheme identifier to be replaced can be determined from the target library to which the scheme is copied on the basis of the scheme copying selection box, and the scheme identifier to be replaced can be displayed in the scheme copying selection box; when the scheme identifier to be replaced has been displayed and the scheme copying control has been enabled, the scheme corresponding to the scheme identifier to be replaced is updated to the current scheme. In this way, after the current scheme is updated, the updated current scheme can be copied to the target library in a timely manner.

In some embodiments, the method may further comprise S401.

In S401, during the welding process, the working parameters of the battery welding process device are displayed on the monitoring interface, and an alarm result is displayed on an alarm information interface, where the alarm result indicates that the working parameters exceed the corresponding welding operating parameter values.

In an embodiment of the present disclosure, the working parameters of the battery welding process device can be displayed in real time on the monitoring interface during the welding process, and the alarm result can be displayed on the alarm information interface when the working parameter exceeds the corresponding welding operating parameter value.

In an embodiment of the present disclosure, an alarm information interface may be displayed on the human-computer interaction interface in response to triggering of a real-time alarm control on the main menu bar, so that an alarm result may be displayed on the alarm information interface.

In some embodiments, the real-time alarm control can be a main menu control on the main menu bar. In an embodiment of the present disclosure, the scheme switching control may be a main menu sub-control under the main menu control on the main menu bar.

Here, the alarm result is used to indicate that a working parameter of the battery welding process device is abnormal. A working parameter of the battery welding process device is abnormal, which may mean that the working parameter exceeds the corresponding welding operating parameter value, and the welding operating parameter value may refer to the upper limit value of the welding operating parameter range. When the working parameter exceeds the upper limit value, it means that the working parameter is abnormal, and it is necessary to display the alarm result corresponding to the working parameter on the alarm information interface to remind the user.

FIG. 4 is a second schematic diagram of the interface of a human-computer interaction interface for welding provided in an embodiment of the present disclosure. As shown in FIG. 4, a human-computer interaction interface 20 for welding may comprise a main menu bar 21, an alarm information control 41, a real-time alarm control 42 and an alarm information interface 43. The user may first click the alarm information control 41 on the main menu bar 21, and then click the real-time alarm control 42 in the sub-main menu bar under the alarm information control 41, thereby entering the alarm information interface 43. The alarm information interface 43 comprises a real-time alarm display area 431 and a latest alarm display area 432. The real-time alarm display area 431 can be sorted according to the time of occurrence of the alarm results. The first row in the real-time alarm display area 431 displays the alarm result of "Scada connection error" that appeared at the time point of "15:49:38:780" on "2023/7/29"; the second row displays the alarm result of "Left bolt Z-axis servo alarm" that appeared at the time point of "15:49:33:650" on "2023/7/29"; the third row displays the alarm result of "Right bolt Z-axis servo alarm" that appeared at the time point of "15:49:33:320" on "2023/7/29". Since the alarm result of "Scada connection error" is the latest alarm result, it can be displayed in the latest alarm display area 432. It is worth noting that the latest alarm display area 432 can be displayed in any interface which can be the scheme switching interface in the above embodiment or a monitoring interface.

In some embodiments, the method may further comprise S302 to S303. In an embodiment of the present disclosure, S302 to S303 may be performed before S301.

In S302, in response to triggering of an operating parameter setting control on the main menu bar, an operating parameter setting interface for the battery welding process device is displayed on the human-computer interaction device, and the welding parameters to be set in the operating parameter setting interface include at least one of the following: the allowable error of accuracy of a sensor, the cleaning parameters of a cleaning device, the allowable error of accuracy of a welding device, and the allowable error of accuracy of a driving device of the welding device.

In some embodiments, the operating parameter setting control can be a main menu control on the main menu bar. In an embodiment of the present disclosure, the operating parameter setting control may be a main menu sub-control under the main menu control on the main menu bar.

Here, the sensor may include at least one of the following: a camera and a rangefinder. The camera may be a charge coupled device (CCD) camera. Correspondingly, the allowable error of accuracy of a sensor may include at least one of the following: maximum allowable error for camera photographing X, maximum allowable error for camera photographing Y, rangefinder range upper limit, rangefinder range lower limit, and range control. The maximum allowable error for camera photographing X is used to indicate the maximum error allowed in the X direction when taking a photo; the maximum allowable error for camera photographing Y is used to indicate the maximum error allowed in the Y direction when taking a photo; the range control is used to indicate the maximum allowable range in a group of measurement values at the same measurement point.

Here, the cleaning parameters of a cleaning device may include at least one of the following: the cleaning time of the copper nozzle, the reminder time before the copper nozzle cleaning, the air knife flow threshold range, the nitrogen flow threshold range and the dust remover wind speed threshold range.

Here, the allowable error of accuracy of the welding device refers to the allowable error of accuracy of the galvanometer welding device. In some embodiments, the allowable error of accuracy may be a fixed defocusing amount.

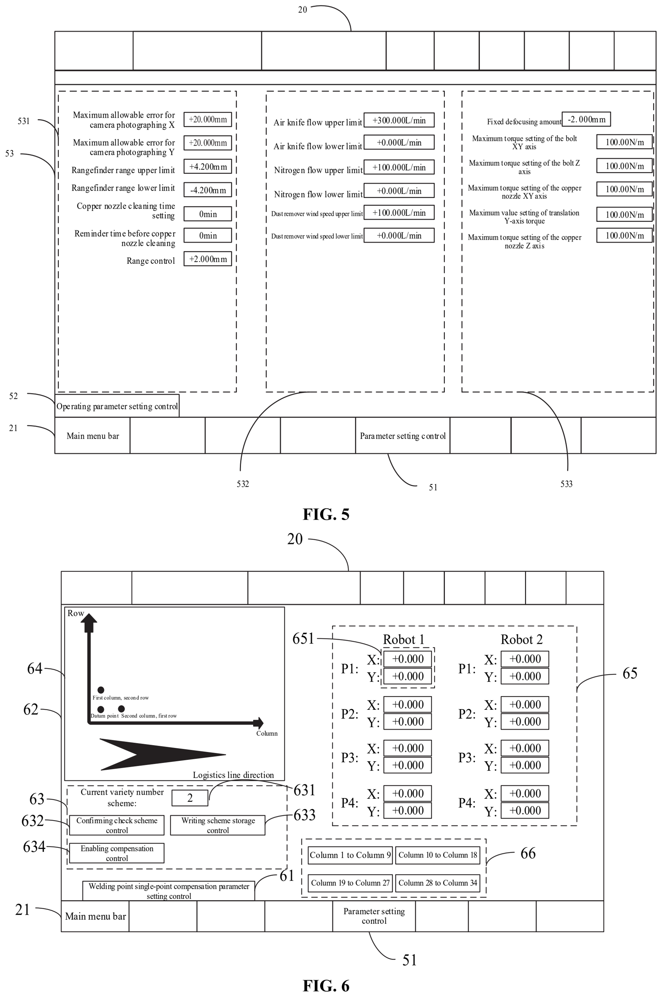

FIG. 5 is a third schematic diagram of the interface of a human-computer interaction interface for welding provided in an embodiment of the present disclosure. As shown in FIG. 5, a human-computer interaction interface 20 for welding may comprise a main menu bar 21, a parameter setting control 51, an operating parameter setting control 52 and an operating parameter setting interface 53. The user may first click the parameter setting control 51 on the main menu bar 21, and then click the operating parameter setting control 52 in the sub-main menu bar under the parameter setting control 51, thereby entering the operating parameter setting interface 53. The operating parameter setting interface 53 comprises first display area 531, a second display area 532 and a third display area 533. Among them,
the first display area 531 may display the allowable error of accuracy of the sensor and some cleaning parameters of the cleaning device. As shown in FIG. 5, the allowable errors of sensor accuracy include: maximum allowable error for camera photographing X: +20.000 millimeters (mm), maximum allowable error for camera photographing Y: +20.000 mm, rangefinder range upper limit: +4.200 mm, rangefinder range lower limit: -4.200 mm, and range control: +2.000 mm. Some cleaning parameters of the cleaning device may include: copper nozzle cleaning time set as 0 minutes (min) and reminder time before copper nozzle cleaning set as 0 min.

The second display area 532 may display some cleaning parameters of the cleaning device. As shown in FIG. 5, some cleaning parameters of the cleaning device include: air knife flow upper limit: +300.000 liters per minute (L/min), air knife flow lower limit: +0.000L/min, nitrogen flow upper limit: +100.000L/min and nitrogen flow lower limit: +0.000L/min; the wind speed parameters include: dust remover wind speed upper limit: +100.000L/min and dust remover wind speed lower limit: +0.000L/min.

The third display area 533 may display information including the allowable error of accuracy of the welding device and the allowable error of accuracy of the driving device of the welding device. As shown in FIG. 5, the allowable error of accuracy of the welding device includes: fixed defocusing amount: -2.000mm; the allowable error of accuracy of the driving device of the welding device includes: maximum torque setting of the bolt XY axis: 100.00 Newtons per meter (N/m), maximum torque setting of the bolt Z axis: 100.00N/m, maximum torque setting of the copper nozzle XY axis: 100.00N/m, maximum torque setting of the translation Y axis: 100.00N/m and maximum torque setting of the copper nozzle Z axis: 100.00N/m.

In S303, the set welding operating parameter values are acquired on the basis of the operating parameter setting interface and stored.

In an embodiment of the present disclosure, after the welding parameters are set on the operating parameter setting interface, the set welding operating parameter values can be obtained on the basis of the operating parameter setting interface and stored.

Here, the welding operating parameter values may be stored in a programmable logic controller (PLC), and then the PLC may control the battery welding process device to perform welding work on a current battery to be welded on the basis of the stored welding operating parameter values.

In an embodiment of the present disclosure, the welding parameters can be set on the operating parameter setting interface, and then the set welding operating parameter values are obtained and stored on the basis of the operating parameter setting interface, so that the battery welding process device can be controlled on the basis of the welding operating parameter values to perform welding work on a current battery to be welded. In this way, various welding parameters can be set up centrally on the operating parameter setting interface, and welding can be performed directly on the basis of the set welding parameters. In this way, the efficiency of setting welding parameters is improved, thereby improving the efficiency of welding work. Moreover, during the welding process on the basis of the set welding operating parameter values, the working parameters of the battery welding process device can be displayed in real time on the monitoring interface, and when the working parameters exceed the corresponding welding operating parameter values, the alarm results can be displayed on the alarm information interface. In this way, the working parameters of the ongoing welding process can be monitored in real time, thereby improving the safety of the welding process. Furthermore, when the working parameters exceed the corresponding welding operating parameter values, the alarm results can be displayed on the alarm information interface. In this way, by displaying the alarm results, the user can be reminded to take corresponding measures, thereby reducing the losses caused by using incorrect working parameters for welding.

In some embodiments, the method may further comprise S501 to S502:
In S501, in response to triggering of a weld point single-point compensation parameter setting control on the main menu bar, a weld point single-point compensation interface is displayed on the human-computer interaction device, and the weld point single-point compensation interface comprises: at least one point display box for the welding device, and a scheme display box for displaying the current scheme identifier.

In S502, a compensation value is displayed or input in at least one point display box for the welding device; and the welding device is controlled to weld the corresponding point on the basis of the compensation value.

In some embodiments, the weld point single-point compensation parameter setting control can be a main menu control on the main menu bar. In an embodiment of the present disclosure, the weld point single-point compensation parameter setting control may be a main menu sub-control under the main menu control on the main menu bar.

Here, the point display box can input and display the compensation value. In some embodiments, the compensation value may be an overall compensation value or an individual compensation value. That is, the point display box may comprise a first point display box and a second point display box. The first point display box is used for inputting and displaying the overall compensation value; the second point display box is used for inputting and displaying the individual compensation value.

Here, the overall compensation value is used to indicate that the same compensation value is used for each welding position during the welding process. The individual compensation value is used to indicate that during the welding process, each welding position can adopt a corresponding compensation value.

Here, the current scheme identifier is used to represent the compensation value scheme used in the current welding process. The compensation value scheme comprises a plurality of pre-set compensation values.

FIG. 6 is a fourth schematic diagram of the interface of a human-computer interaction interface for welding provided in an embodiment of the present disclosure. As shown in FIG. 6, a human-computer interaction interface 20 for welding may comprise a main menu bar 21, a parameter setting control 51, a welding point single-point compensation parameter setting control 61 and a welding point single-point compensation interface 62; the welding point single-point compensation interface 62 comprises a scheme confirmation area 63, a battery row and column indication area 64, an overall compensation area 65 and an individual compensation area 66. The user may first click the parameter setting control 51 on the main menu bar 21, and then click the welding point single-point compensation parameter setting control 61 in the sub-main menu bar under the parameter setting control 51, thereby entering the welding point single-point compensation interface 62.

The scheme confirmation area 63 is used for determining the compensation value scheme currently used. As shown in FIG. 6, the scheme confirmation area 63 comprises a scheme display box 631, a confirming check scheme control 632, a writing scheme storage control 633, and an enabling compensation control 634. The scheme display box 631 is used for displaying the current scheme identifier, and the current scheme identifier displayed in the scheme display box 631 is "2". The confirming check scheme control 632 is used for checking the compensation value in the scheme corresponding to the current scheme identifier. In an embodiment of the present disclosure, in response to triggering of the check scheme control 632, the compensation value of the scheme corresponding to the current scheme identifier may be displayed in the overall compensation area 65 and/or the individual compensation area 66. In some embodiments, after determining that the compensation value in the scheme corresponding to the current scheme identifier is correct or modifying the compensation value in the scheme corresponding to the current scheme identifier, the scheme can be stored by the writing scheme storage control 633, that is, in response to triggering of the scheme storage control 633, the compensation value in the scheme corresponding to the current scheme identifier is stored. The enabling compensation control 634 is used for enabling the compensation value in the scheme corresponding to the current scheme identifier.

In an embodiment of the present disclosure, after the compensation value in the scheme corresponding to the current scheme identifier is stored, the welding device can be controlled to weld the corresponding point on the basis of the compensation value in response to triggering of the enabling compensation control.

The battery row and column indication area 64 is used for illustrating the arrangement mode of the current battery to be welded. As shown in FIG. 6, the vertical coordinate in the battery row and column indication area 64 is used for representing the row number of the current battery to be welded, and the horizontal coordinate is used for representing the column number of the current battery to be welded.

The overall compensation area 65 is used for displaying the overall compensation value of a plurality of welding positions of the current battery to be welded. As shown in FIG. 6, robots 1 and 2 are used for welding a current battery to be welded. The current battery to be welded comprises a plurality of welding positions, and each welding position comprises four welding points, namely "P1, P2, P3, and P4". Each welding point has a corresponding compensation value in the direction X and the direction Y. The compensation value can be displayed through the first point display box 651 corresponding to each welding point, or the corresponding compensation value can be input on the first point display box 651.

The overall compensation area 66 is used for displaying the individual compensation value of each welding position of the current battery to be welded. The overall compensation area 66 comprises a plurality of column selection controls, namely, "Column 1 to Column 9", "Column 10 to Column 18", "Column 19 to Column 27", and "Column 28 to Column 34". It should be noted that the "Column 34" does not represent the maximum number of columns of current batteries to be welded. The "Column 34" is a preset number of columns that can cover the maximum number of columns of all current types of batteries, thereby improving the compatibility of the human-computer interaction device.

In an embodiment of the present disclosure, a row number interface may be displayed on the human-computer interaction device in response to triggering of any column selection control. Exemplarily, when the user clicks the "Column 1 to Column 9" control, a row number interface corresponding to "Column 1 to Column 9" may be displayed on the human-computer interaction device.

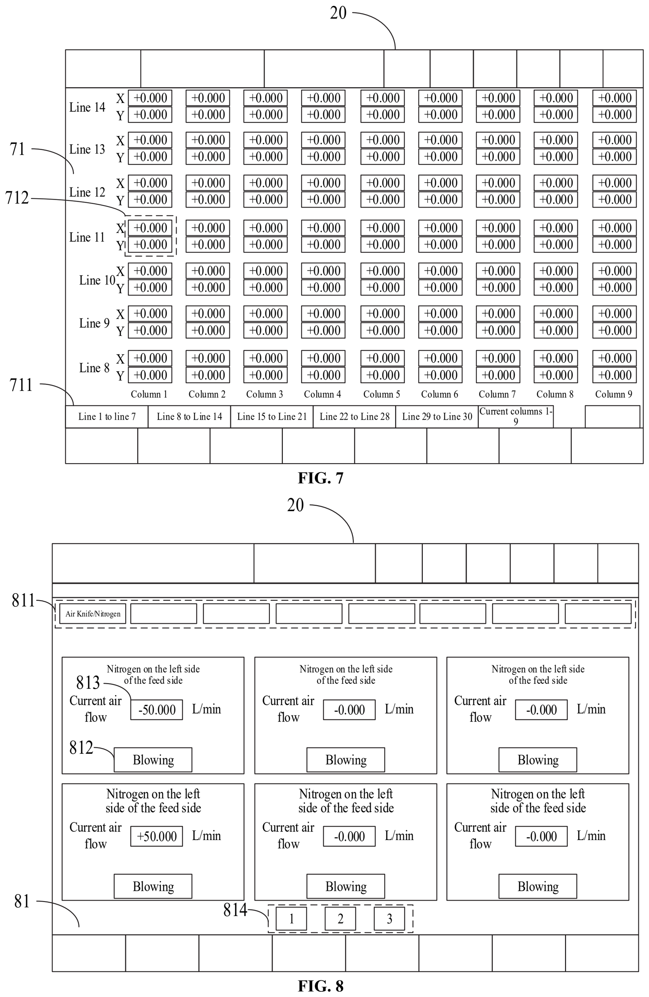

FIG. 7 is a fifth schematic diagram of the interface of a human-computer interaction interface for welding provided in an embodiment of the present disclosure. As shown in FIG. 7, a human-computer interaction interface 20 for welding may comprise a row number interface 71, the row number interface 71 comprises a plurality of row selection controls 711 and a second point display box 712 for displaying the individual compensation value of each welding position of the current battery to be welded. The row number displayed on the row number interface 71 is the row number corresponding to "Column 1 to Column 9". The plurality of row selection controls 711 may comprise "Row 1 to Row 7", "Row 8 to Row 14", "Row 15 to Row 21", "Row 22 to Row 28", and "Row 29 to Row 30". In an embodiment of the present disclosure, in response to triggering of any row selection control, a plurality of second point display boxes can be displayed in the row number interface. After triggering "Row 8 to Row 14", a plurality of second point display boxes 712 of "Column 1 to Column 9" and "Row 8 to Row 14" may be displayed in the row number interface. It should be noted that the "Row 30" does not represent the maximum number of rows of the current battery to be welded. The "Row 30" is a preset number of rows that can cover the maximum number of rows of all current types of batteries, thereby improving the compatibility of the human-computer interaction device.

In some embodiments, the method may further comprise S601 to S602:
In S601, at least one pagination control interface in a manual operation interface is displayed, wherein one of the pagination control interfaces comprises an adjustment control for the working parameter and a real-time display box for the working parameter.
In S602, in response to the operation on the adjustment control for the working parameter, the adjusted working parameter value is displayed in the real-time display box for the working parameter, and the corresponding battery welding process device is controlled on the basis of the adjusted working parameter value.

Here, the manual operation interface is used for manually adjusting various types of working parameters, and each pagination control interface corresponds to one working parameter. That is, the corresponding working parameters can be manually adjusted through the pagination control interface corresponding to the working parameters.

Here, the pagination control interface comprising the adjustment controls for the working parameters and the real-time display box for the working parameters can be a pagination control interface for manually adjusting the cleaning parameters of the cleaning device, or a pagination control interface for manually adjusting various parameters of the driving device. The driving device here may be a servo.

In some embodiments, in response to triggering of a manual operation control on the main menu bar, at least one pagination control interface in the manual operation interface is displayed on the human-computer interaction device.

FIG. 8 is a sixth schematic diagram of the interface of a human-computer interaction interface for welding provided in an embodiment of the present disclosure, wherein the human-computer interaction interface 20 for welding may comprise a first pagination control interface 81. The first pagination control interface 81 is used for manually adjusting the cleaning parameters of the cleaning device; the cleaning parameters can be nitrogen flow or air knife flow. The first pagination control interface 81 comprises a control interface selection bar 811, a first adjustment control 812, a first real-time display box 813 and a page number area 814. The control interface selection bar 811 is used for selecting a pagination control interface corresponding to a working parameter. As shown in FIG. 8, the control interface selection bar 811 displays "Air Knife/Nitrogen", indicating that the current pagination control interface is used for manually adjusting the nitrogen flow/air knife flow. In some embodiments, the interface selection bar 811 may also comprise: a dust remover/water cooler control, a cylinder control, a servo control, a butterfly valve control, a station initialization control, a working mode control and a camera control (all of the above controls are not shown). The first adjustment control 812 is used for controlling the corresponding battery welding process device using the working parameter value displayed in the first real-time display box. The first real-time display box 813 is used for displaying the current working parameter value. As shown in FIG. 8, the current flow of nitrogen on the left side of the feed side is -50.000 L/min. When the first adjustment control 812 (i.e., "Blowing") is triggered, the corresponding battery welding process device can be controlled by the current flow of nitrogen on the left side of the feed side. The page number area 814 is used for displaying the page number of the first pagination control interface 81. After the page number in the page number area 814 is triggered, the first pagination control interface 81 of the next page can be displayed. Exemplarily, the first pagination control interface 81 with page numbers "2" and "3" may be a pagination control interface for controlling the air knife flow.

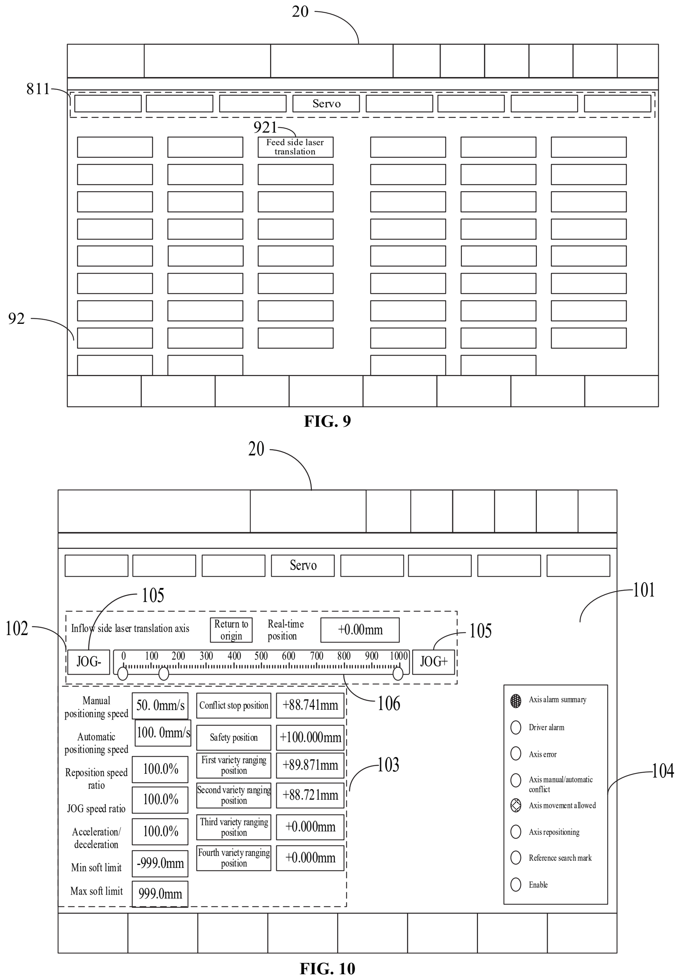

FIG. 9 is a seventh diagram of the interface of a human-computer interaction interface for welding provided in an embodiment of the present disclosure, and as shown in FIG. 9, a human-computer interaction interface 20 for welding may comprise a servo selection interface 92. The servo selection interface 92 can be entered by triggering "Servo" in the control interface selection bar 811. The servo selection interface 92 may comprise a plurality of servo selection controls 921. As shown in FIG. 9, the servo selection control 921 may be an "Feed side laser translation" control.

In an embodiment of the present disclosure, in response to triggering of the servo selection control, a pagination control interface corresponding to the servo selection control may be displayed.

FIG. 10 is an eighth schematic diagram of the interface of a human-computer interaction interface for welding provided in an embodiment of the present disclosure, and as shown in FIG. 10, a human-computer interaction interface 20 for welding may comprise a second pagination control interface 101. The second pagination control interface 101 is entered by triggering the feed-side laser translation control in the servo selection interface. The second pagination control interface 101 comprises a control parameter area 102, a parameter preset area 103, and a servo first state display area 104. The control parameter area 102 is used for manually controlling the parameters of the inflow side laser translation axis. The control parameter area 102 may comprise a second adjustment control 105 and a second real-time display box 106. The second adjustment control 105 is used for controlling the corresponding battery welding process device using the working parameter value displayed in the second real-time display box. The second real-time display box 106 is used for displaying the current working parameter value. As shown in FIG. 10, "JOG-" in the second adjustment control 105 represents decreasing the working parameter value, and "JOG+" represents increasing the working parameter value; the second real-time display box 106 displays "140".

The parameter preset area 103 comprises a plurality of product servo parameters, and the product servo parameters correspond to product types. As shown in FIG. 10, the product servo parameters in the parameter preset area 103 comprise: manual positioning speed: 50.0mm/s, automatic positioning speed: 100.0mm/s, reposition speed ratio: 100.0%, JOG speed ratio: 100.0%, acceleration/deceleration: 100.0%, minimum (Min) soft limit: -999.0mm, maximum (Max) soft limit: 999.0mm, conflict stop position: +88.741mm, safety position, +100.000mm, first variety ranging position: +89.871mm, second variety ranging position: +88.721mm, third variety ranging position: +0.000mm and fourth variety ranging position: +0.000mm.

The servo first state display area 104 is used for displaying the current servo state. As shown in FIG. 10, the servo state comprises axis alarm summary, driver alarm, axis error, axis manual/automatic conflict, axis movement allowed, axis repositioning, reference search mark, and enabling.

In some embodiments, the method may further comprise: displaying a third pagination control interface in response to triggering of a dust remover/water cooler control in the control interface selection bar. The third pagination control interface comprises a first startup control and a reset control. The first startup control is used for starting the dust remover or the water cooler; the reset control is used for restoring the dust remover or the water cooler to default settings.

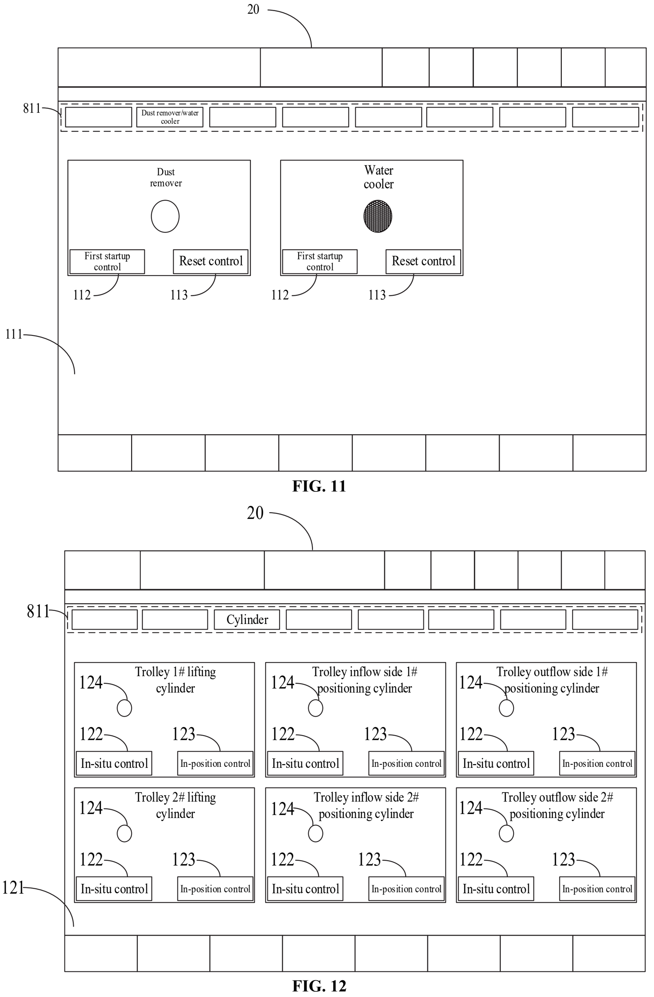

FIG. 11 is a ninth schematic diagram of the interface of a human-computer interaction interface for welding provided in an embodiment of the present disclosure, and as shown in FIG. 11, a human-computer interaction interface 20 for welding may comprise a third pagination control interface 111 and a control interface selection bar 811. The third pagination control interface 111 can be entered by triggering "Dust remover/Water cooler" in the control interface selection bar 811. The third pagination control interface 111 comprises a first startup control 112 and a reset control 113. As shown in FIG. 11, the water cooler is currently in a start-up state, and the dust remover is in a state that is not started up.

In some embodiments, the method may further comprise: in response to triggering of a cylinder control in the control interface selection bar, displaying a fourth pagination control interface. The fourth pagination control interface comprises an in-situ control, an in-position control, and a first state display area corresponding to the cylinder. The in-situ control is used for controlling the corresponding cylinder to return to the original starting position; the in-position control is used for controlling the corresponding cylinder to return to the specified position. The first state display area is used for determining whether a conflict occurs between the cylinder manual and automatic modes.

FIG. 12 is a tenth schematic diagram of the interface of a human-computer interaction interface for welding provided in an embodiment of the present disclosure, where a human-computer interaction interface 20 for welding may comprise a fourth pagination control interface 121 and a control interface selection bar 811. The fourth pagination control interface 121 can be entered by triggering "Cylinder" in the control interface selection bar 811. The fourth pagination control interface 121 comprises an in-situ control 122, an in-position control 123, and a first state display area 124 corresponding to the cylinder. As shown in FIG. 12, the cylinders may comprise trolley 1# lifting cylinder, trolley inflow side 1# positioning cylinder, trolley outflow side 1# positioning cylinder, trolley 2# lifting cylinder, trolley inflow side 2# positioning cylinder and trolley outflow side 2# positioning cylinder. Each cylinder corresponds to an in-situ control 122, an in-position control 123 and a first state display area 124. When the cylinder undergoes a conflict between the manual mode and the automatic mode, the corresponding first state display area 124 may display yellow; when the cylinder does not undergo a conflict between the manual mode and the automatic mode, the corresponding first state display area 124 may display white.

In some embodiments, the method may further comprise: in response to triggering of a butterfly valve control in the control interface selection bar, displaying a fifth pagination control interface. The fifth pagination control interface comprises a second startup control, a stop control and a second state display area corresponding to the butterfly valve. The second startup control is used for controlling the corresponding butterfly valve to start; the stop control is used for controlling the corresponding butterfly valve to stop working. The second state display area is used for determining whether the manual/automatic mode of the cylinder is in operation.

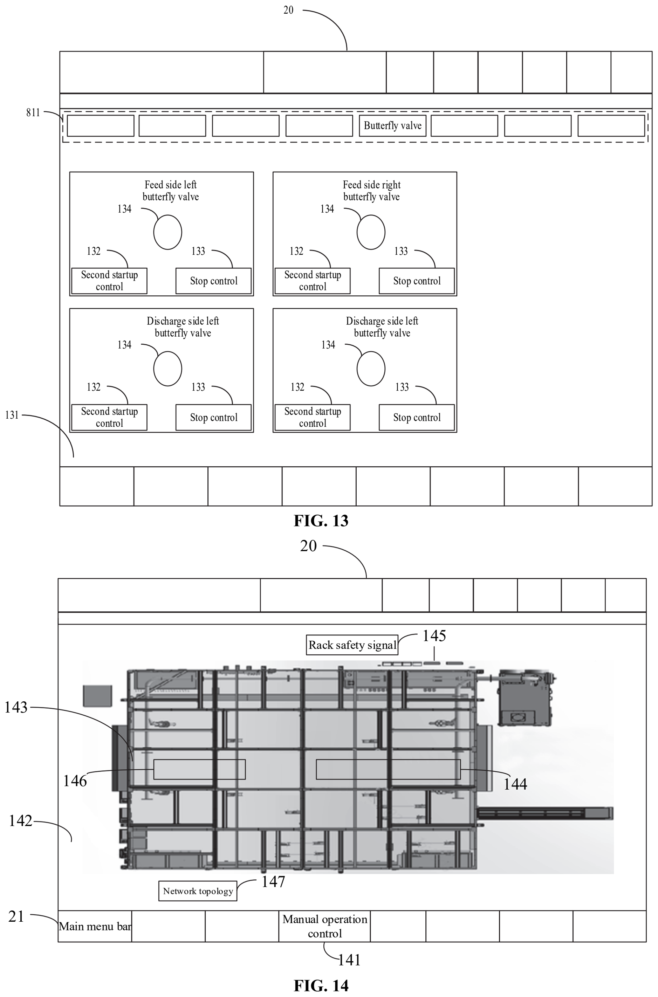

FIG. 13 is an eleventh schematic diagram of the interface of a human-computer interaction interface for welding provided in an embodiment of the present disclosure, and as shown in FIG. 13, a human-computer interaction interface 20 for welding may comprise a fifth pagination control interface 131 and a control interface selection bar 811. The fifth pagination control interface 131 can be entered by triggering "Butterfly valve" in the control interface selection bar 811. The fifth pagination control interface 131 comprises a second startup control 132, a stop control 133 and a second state display area 134 corresponding to the butterfly valve. The butterfly valve may comprise a feed side left butterfly valve, a feed side right butterfly valve, a discharge side left butterfly valve, and a discharge side left butterfly valve. Each butterfly valve comprises a second startup control 132, a stop control 133 and a second state display area 134. When the butterfly valve is activated, the corresponding second state display area 134 may display green.

In an embodiment of the present disclosure, a pagination control interface can be displayed, and the working parameters can be adjusted on the basis of the adjustment control for the working parameters in the pagination control interface, and the adjusted working parameter values can be displayed in the real-time display box for the working parameters; then, the corresponding battery welding process device can be controlled on the basis of the adjusted working parameter values. In this way, different working parameters can be adjusted manually, which improves the diversity in controlling the battery welding process device. Moreover, in the embodiment of the present disclosure, different pagination control interfaces can be displayed for different working parameters. In this way, manual adjustment of different working parameters is achieved.

In some embodiments, the method may further comprise: in response to triggering of a manual operation control on the main menu bar, displaying a layout interface of the manual operation interface, the layout interface being used for displaying the layout of the battery welding process device and at least one jump control, the at least one jump control comprising: a jump control for the welding battery welding process device, a jump control for the rack safety signal, a jump control for the shutdown reason, and a jump control for the network topology; in response to a selection operation on the at least one jump control, entering the pagination control interface on the basis of the selected jump control.

In some embodiments, the manual operation control can be a main menu control on the main menu bar. In an embodiment of the present disclosure, the manual operation control may be a main menu sub-control under the main menu control on the main menu bar.

FIG. 14 is a twelfth schematic diagram of the interface of a human-computer interaction interface for welding provided in an embodiment of the present disclosure. As shown in FIG. 14, a human-computer interaction interface 20 for welding may comprise a main menu bar 21, a manual operation control 141 and a manual operation interface 142. The manual operation interface 142 comprises a layout interface 143. The user can click the manual operation control 141 on the main menu bar 21 to enter the layout interface 143 in the manual operation interface 142. The layout interface 143 can display the layout of the battery welding process device, the jump control for the welding battery welding process device 144, the jump control for the rack safety signal 145, the jump control for the shutdown reason 146 and the jump control for the network topology 147. When the user selects the jump control for the welding battery welding process device 144, the pagination control interface in the above embodiment can be entered. In some embodiments, the pagination control interface may be a first pagination control interface.

In an embodiment of the present disclosure, in response to triggering of a manual operation control on the main menu bar, a layout interface of the manual operation interface can be displayed, where the layout interface is used for displaying the layout of the battery welding process device and at least one jump control; then, in response to a selection operation on at least one jump control, the pagination control interface is entered on the basis of the selected jump control. In this way, the user can directly jump to the pagination control interface for manually controlling the working parameters on the layout interface of the manual operation interface, thereby improving the working efficiency of manually controlling the working parameters.

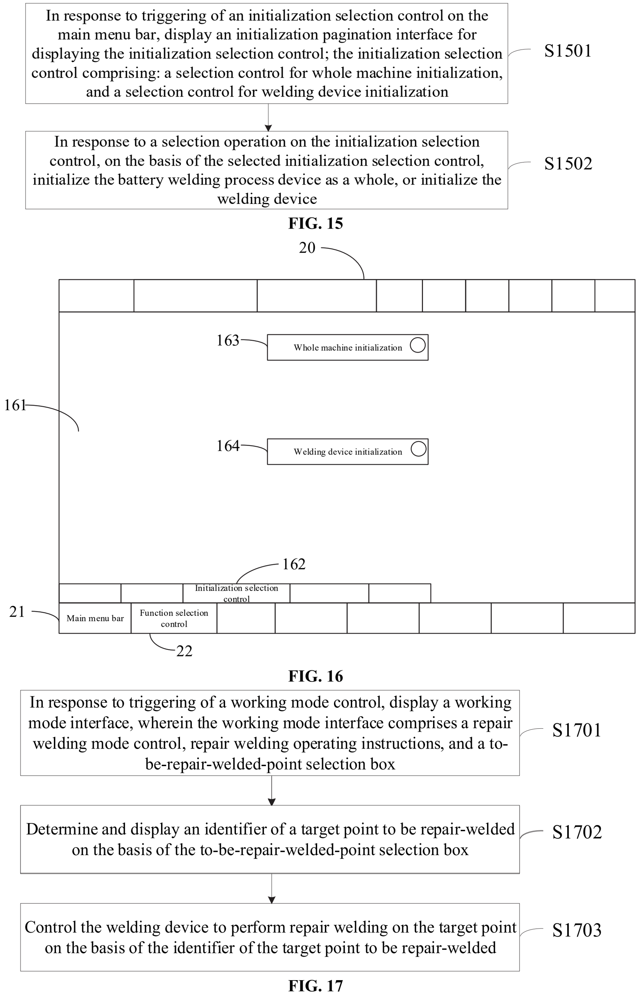

FIG. 15 is a third schematic flowchart of implementing a human-computer interaction control method for welding provided in an embodiment of the present disclosure, and after step S104, as shown in FIG. 15, the method may further comprise S1501 to S1502.

In S1501, in response to triggering of an initialization selection control on the main menu bar, an initialization pagination interface for the initialization selection control is displayed; the initialization selection control comprises: a selection control for whole machine initialization, and a selection control for welding device initialization.

In S1502, in response to a selection operation on the initialization selection control, on the basis of the selected initialization selection control, the battery welding process device as a whole is initialized, or the welding device is initialized.

Here, the initialization selection control is a main menu sub-control under the main menu control on the main menu bar. In some embodiments, the initialization selection control is a main menu sub-control under the function selection control on the main menu bar. That is, the user needs to first click the function selection control on the main menu bar, and then click the initialization selection control under the function selection control to enter the initialization pagination interface for displaying the initialization selection control.

In some embodiments, the initialization pagination interface can be directly entered on the basis of the function selection control on the main menu bar. That is, in response to the function selection control on the main menu bar, the function selection interface is displayed. The function selection interface comprises an initialization pagination interface for displaying an initialization selection control.

In some embodiments, the initialization pagination interface can also be entered on the basis of the station initialization control in the interface selection bar in the pagination control interface, that is, the initialization pagination interface is displayed in response to triggering of the station initialization control in the interface selection bar. The pagination control interface here can be any pagination control interface in the above embodiments.

In an embodiment of the present disclosure, the selection control for whole machine initialization is used to initialize the battery welding process device as a whole; the selection control for welding device initialization is used for initializing the welding device. Initializing the battery welding process device as a whole may mean resetting all driving devices of the welding device, which may comprise control means such as cylinders and axes, as well as third-party devices such as robots. Initializing welding device means resetting the cylinder, servo and other components of the welding device to their origin.

FIG. 16 is a thirteenth schematic diagram of the interface of a human-computer interaction interface for welding provided in an embodiment of the present disclosure. As shown in FIG. 16, a human-computer interaction interface 20 for welding may comprise a main menu bar 21 and an initiation pagination interface 161. The main menu bar 21 comprises a function selection control 22 and an initialization selection control 162. The user may first click the function selection control 22 and then click the initialization selection control 162 under the function selection control 22 to enter the initialization pagination interface 161. The initialization pagination interface 161 comprises a selection control for whole machine initialization 163 and a selection control for welding device initialization 164.

In an embodiment of the present disclosure, in response to triggering of an initialization selection control on the main menu bar, an initialization pagination interface for the initialization selection control can be displayed; then, in response to a selection operation on the initialization selection control, on the basis of the selected initialization selection control, the battery welding process device as a whole is initialized, or the welding device is initialized. In this way, when the current battery to be welded needs to be replaced, the battery welding process device as a whole or the welding device can be initialized through the initialization selection control, thereby improving the efficiency of the welding work. In addition, the object to be initialized can be selected according to the actual situation. In this way, when the whole machine does not need to be initialized, only the welding device can be initialized through the selection control for welding device initialization, thereby improving the selectivity of initialization.

FIG. 17 is a fourth schematic flowchart of implementing a human-computer interaction control method for welding provided in an embodiment of the present disclosure, and after step S104, as shown in FIG. 17, the method may further comprise S1701 to S1703.

In S1701, in response to triggering of a working mode control, a working mode interface is displayed, wherein the working mode interface comprises a repair welding mode control, operating instructions, and a to-be-repair-welded-point selection box.

Here, the working mode control is located in the interface selection bar in the pagination control interface, that is, in response to triggering of the working mode control in the interface selection bar, the working mode interface is displayed.

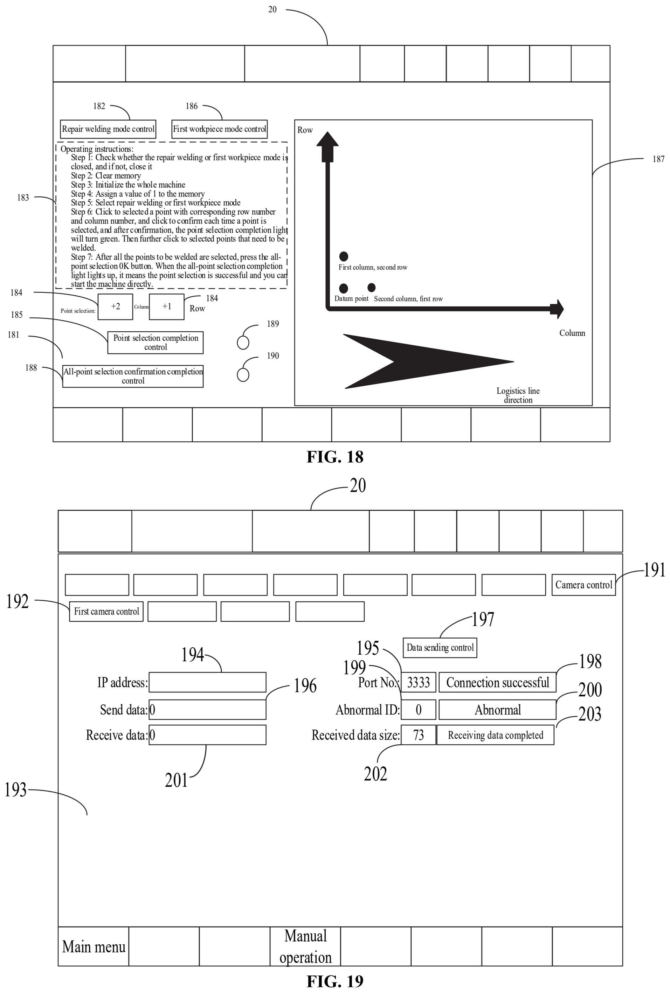

FIG. 18 is a fourteenth schematic diagram of the interface of a human-computer interaction interface for welding provided in an embodiment of the present disclosure. As shown in FIG. 18, a human-computer interaction interface 20 for welding may comprise a working mode interface 181, and the working mode interface 181 may comprise a repair welding mode control 182, operating instructions 183 and a to-be-repair-welded-point selection box 184. The to-be-repair-welded-point selection box 184 is used for determining the point to be repair-welded. The identifier of the point to be repair-welded selected in the to-be-repair-welded-point selection box 184 is "+2 columns, +1 row".

In S1702, the identifier of the target point to be repair-welded is determined and displayed on the basis of the to-be-repair-welded-point selection box.

In S1703, the welding device is controlled to perform repair welding on the target point on the basis of the identifier of the target point to be repair-welded.

In an embodiment of the present disclosure, the target point to be repair-welded may be a point, and after the target point to be repair-welded is determined, the welding device is controlled to perform repair welding on the target point on the basis of the identifier of the target point to be repair-welded.

In some embodiments, the working mode interface also comprise a point selection completion control, such as the point selection completion control 185 in FIG. 18. In an embodiment of the present disclosure, the target point to be repair-welded can be determined by the point selection completion control, that is, after the to-be-repair-welded-point selection box displays the identifier of the target point to be repair-welded, the target point to be repair-welded is determined in response to triggering of the point selection completion control.

In some embodiments, the working mode interface further comprises a first workpiece mode control, such as the first workpiece mode control 186 in FIG. 18. In response to triggering of the first workpiece mode control, welding can be performed on the points on the first workpiece on the basis of S1702 and S1703.

In some embodiments, the working mode interface further comprises a point selection layout diagram and an all-point selection confirmation completion control; when there is at least one target point, the above-mentioned human-computer interaction control method for welding can also be implemented through S1704 to S1705:
In S1704, each time after the identifier of the target point to be repair-welded is determined on the basis of the to-be-repair-welded-point selection box, the position of the target point is displayed on the point selection layout diagram.
In S1705, when the all-point selection confirmation completion control is enabled, the welding device is controlled to perform repair welding on the at least one target point on the basis of the identifier of the at least one target point.

In an embodiment of the present disclosure, each time the identifier of the target point to be repair-welded is displayed in the to-be repair-welded-point selection box, and in response to triggering of the point selection completion control, after the target point to be repair-welded is determined, the position of the target point can be displayed on the point selection layout diagram. This allows the position of the target point to be displayed visually.

Here, the all-point selection confirmation completion control is enabled to indicate that all target points to be repair-welded have been determined. At this time, the welding device can be controlled to perform repair welding on the at least one target point on the basis of the identifier of the determined at least one target point.

As shown in FIG. 18, the working mode interface 181 may further comprise a point selection layout diagram 187 and an all-point selection confirmation completion control 188. The point selection layout diagram 187 can display the positions of the target points to be repair-welded which are determined on the basis of the to-be-repair-welded-point selection box 184. As shown in FIG. 18, the point selection layout diagram 187 comprises the positions of two target points to be repair-welded, namely, "First column, second row" and "Second column, first row". The all-point selection confirmation completion control 188 is used for controlling the welding device to perform repair welding on at least one target point. As shown in FIG. 18, after the positions of the two target points are displayed on the point selection layout diagram 187, the all-point selection confirmation completion control can be clicked, and then the welding device may be controlled to perform repair welding on the two target points on the basis of the identifier of the two target points.

In an embodiment of the present disclosure, each time the identifier of the target point to be repair-welded is determined on the basis of the to-be repair-welded-point selection box, the position of the target point is displayed on the point selection layout diagram; in this way, the position of the target point can be displayed in a visualized manner, so that the position of each target point can be visually determined, and then whether the target point is correct can be quickly determined. In response to the fact that the all-point selection confirmation completion control is enabled, the welding device is controlled to perform repair welding on at least one target point on the basis of the identifier of the at least one target point. In this way, the welding device can only perform repair welding when the all-point selection confirmation completion control is enabled, which can reduce failures in repair welding due to errors in determining the target points.

In some embodiments, the working mode interface further comprises a point selection completion control, and the current state of the point selection completion control is distinguished by color; the above-mentioned human-computer interaction control method for welding can also be implemented through S1706 to S1708:
In S1706, after determining the identifier of the current target point to be repair-welded on the basis of the to-be repair-welded-point selection box, when the current state of the point selection completion control is a non-enabled state, the position of the current target point to be repair-welded is displayed in a first color on the point selection layout diagram.
In S1707, in response to triggering of the point selection completion control so that the current state of the point selection completion control is an enabled state, the position of the target point is displayed in a second color on the point selection layout diagram; the first color is different from the second color.

Here, the point selection completion control is in a non-enabled state to indicate that the current target point to be repair-welded is not determined, and the point selection completion control is in an enabled state to indicate that the current target point to be repair-welded is determined. That is to say, to determine the current target point to be repair-welded, it is necessary to first determine the identifier of the current target point to be repair-welded on the basis of the to-be repair-welded-point selection box. At this time, the position of the current target point to be repair-welded is displayed in a first color on the point selection layout diagram; then, in response to triggering of the point selection completion control, when the current state of the point selection completion control is an enabled state, the position of the target point is displayed in a second color different from the first color on the point selection layout diagram, which now represents that the target point is selected successfully.

As shown in FIG. 18, the colors of the two target points displayed in the point selection layout diagram 187 are both black, indicating that the two target points have been successfully determined, that is, the triggering of the point selection completion control causes the two target points to have their corresponding positions displayed in the second color (i.e., black).

In an embodiment of the present disclosure, it is possible to distinguish by color whether the point selection completion control is in an enabled state. For example, when the color corresponding to the point selection completion control is green, the point selection completion control is in an enabled state; when the color corresponding to the point selection completion control is non-green, the point selection completion control is in a non-enabled state. The non-green color may be red, white or other colors different from green.

In some embodiments, the color corresponding to the point selection completion control can be represented by a point selection completion light, that is, when the color of the point selection completion light is green, it means that the point selection completion control is in an enabled state; when the color of the point selection completion light is non-green, it means that the point selection completion control is in a non-enabled state.

As shown in FIG. 18, the working mode interface 181 can also comprise a point selection completion light 189 and an all-point selection completion light 190; wherein, the color displayed by the point selection completion light 189 reflects the state of the point selection completion control 185, and when the color displayed by the point selection completion light 189 is white, it can determine that the point selection completion control 185 is in a non-enabled state; the color displayed by the all-point selection completion light 190 reflects the state of the all-point selection confirmation completion control 188. When the color displayed by the all-point selection completion light 190 is white, it can determine that the all-point selection confirmation completion control 188 is in a non-enabled state.

In S1708, when the identifier of the next target point to be repair-welded is determined on the basis of the to-be repair-welded-point selection box, the current state of the point selection completion control is displayed as a non-enabled state.

In an embodiment of the present disclosure, when the identifier of the next target point to be repair-welded is determined on the basis of the to-be repair-welded-point selection box, the current state of the point selection completion control is a non-enabled state. That is to say, the current state of the point selection completion control is the default non-enabled state. Each time the identifier of the target point to be repair-welded is determined, the state of the point selection completion control needs to be changed to the enabled state to confirm the completion.

In an embodiment of the present disclosure, after the identifier of the current target point to be repair-welded is determined on the basis of the to-be repair-welded-point selection box, when the current state of the point selection completion control is a non-enabled state, the position of the current target point to be repair-welded is displayed in a first color on the point selection layout diagram; in response to triggering of the point selection completion control, when the current state of the point selection completion control is an enabled state, the position of the target point is displayed in a second color different from the first color on the point selection layout diagram. In this way, from the point selection layout diagram, it can be visually seen which target point is not determined on the basis of the point selection completion control, so that it can be confirmed again whether the target point displayed in the first color is correct. When the identifier of the next target point to be repair-welded is determined on the basis of the to-be repair-welded-point selection box, the current state of the point selection completion control is displayed as a non-enabled state. In this way, it can be ensured that each time the identifier of the target point to be repair-welded is determined, it is necessary to confirm the completion through the point selection completion control, thereby improving the accuracy in determining the target point.

In some embodiments, the above-mentioned human-computer interaction control method for welding can also be implemented through S1801 to S1804:
In S1801, in response to triggering of a camera control, a camera interface is displayed; the camera interface comprises an address selection box, a port selection box, a data sending selection box, and a data sending control.

Here, the camera control is located in the interface selection bar in the pagination control interface, that is, in response to triggering of the camera control in the interface selection bar, the camera interface is displayed.

In some embodiments, after the camera control in the interface selection bar is triggered, at least one camera sub-control is displayed, and in response to triggering of any camera sub-control, the camera interface is displayed.

In S1802, on the basis of the address selection box and the port selection box, the address and port information of the receiver object is determined and displayed.

In an embodiment of the present disclosure, the address information of the receiver object may be determined on the basis of the address selection box, and the port information of the receiver object may be determined on the basis of the port selection box.

In some embodiments, the receiver object may be a PLC.

In S1803, on the basis of the data sending selection box, the data to be sent is determined.

Here, the data to be sent may be image data captured by a camera.

In S1804, in response to triggering of the data sending control, the data to be sent is sent to the receiver object on the basis of the address and port information of the receiver object.

In an embodiment of the present disclosure, after the data sending control is triggered, the data to be sent can be sent to the receiver object through the address and port information of the receiver object.

FIG. 19 is a fifteenth schematic diagram of the interface of a human-computer interaction interface for welding provided in an embodiment of the present disclosure. As shown in FIG. 19, a human-computer interaction interface 20 for welding may comprise a camera control 191, a first camera control 192 and a camera interface 193. The user may first click the camera control 191 and then click the first camera control 192 to enter the camera interface 193. The camera interface 193 comprises an address selection box 194, a port selection box 195, a data sending selection box 196, and a data sending control 197. The address selection box 194 is used for determining the address information of the receiver target; the port selection box 195 determines the port information of the receiver target, that is, the port information is "3333"; the data sending selection box 196 is used for determining the data to be sent; the data sending control 197 is used for sending the data to be sent to the receiver object on the basis of the address and port information of the receiver object.

In some embodiments, the camera interface may further comprise a connection success display box, an abnormal identifier display box, an abnormal state display box, a received data display box, a received data size display box, and a data reception completion display box. The connection success display box is used for displaying whether the communication connection with the receiver object is successful; the abnormal identifier display box is used for displaying an identifier of the abnormal object; the abnormal state display box is used for displaying whether the state of the abnormal object is an abnormal state; the received data display box is used for displaying the data to be received; the received data size display box is used for displaying the size of the data to be received; the data reception completion display box is used for determining whether the data to be received has been received.

As shown in FIG. 19, the camera interface may further comprise a connection success display box 198, an abnormal identifier display box 199, an abnormal state display box 200, a received data display box 201, a received data size display box 202, and a data reception completion display box 203. When the connection success display box 198 lights up, it means that the communication connection with the receiver object is successful; when the abnormal identifier display box 199 displays a specific abnormal identifier and the abnormal state display box 201 lights up, it means that the object corresponding to the abnormal identifier is in an abnormal state. "73" in the received data size display box 202 represents that the size of the received data is 73 kilobytes (kb). When the data reception completion display box 203 lights up, it means that the data to be received has been received.

In an embodiment of the present disclosure, the address and port information of the receiver object can be determined and displayed through the address selection box and the port selection box in the camera interface, and the data to be sent can be determined through the data sending selection box; finally, in response to triggering of the data sending control, the data to be sent is sent to the receiver object on the basis of the address and port information of the receiver object. In this way, data interaction with the receiver object is achieved through the camera interface, which improves the efficiency of welding work.

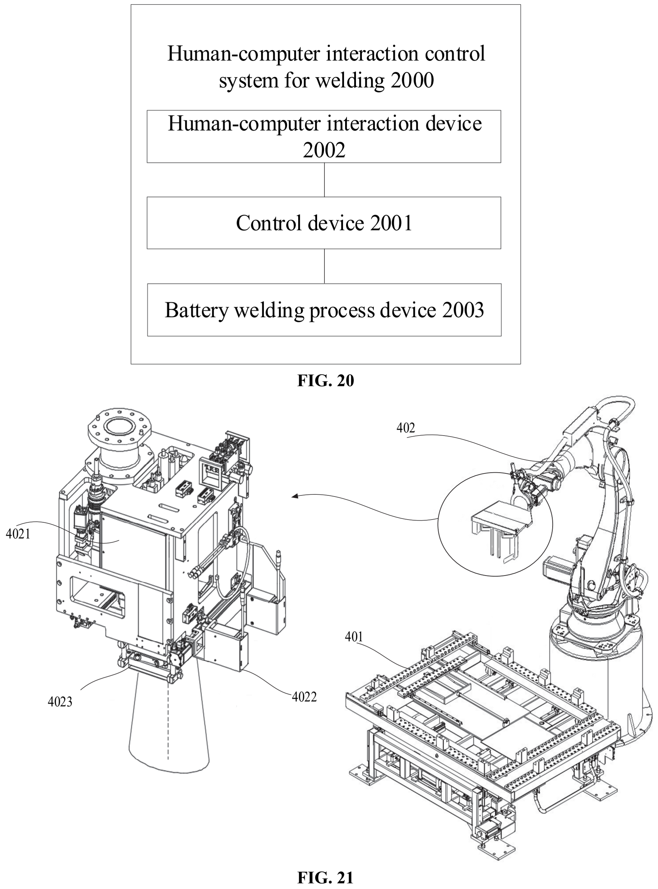

FIG. 20 is a schematic diagram of a composition structure of a human-computer interaction control system for welding provided in an embodiment of the present disclosure. As shown in FIG. 20, the human-computer interaction control system for welding 2000 comprises:
a control device 2001, used for implementing some or all of the steps in the above method;
a human-computer interaction device 2002, used for displaying a human-computer interaction interface;
a battery welding process device 2003, used for implementing measurement and welding operations on a battery to be welded.

FIG. 21 is a schematic diagram of a composition structure of a battery welding process device provided in an embodiment of the present disclosure. As shown in FIG. 21, the battery welding process device comprises a welding mobile device 402 provided on a welding station 401, and a welding module 4021 and a ranging sensor 4022 provided on the welding mobile device 402, wherein:
a control device, which, in addition to the methods described in the above embodiments, for example, can also be used for obtaining a terminal post coordinate set of a plurality of terminal posts of a battery to be welded in a welding station coordinate system; on the basis of the terminal post coordinate set and the welding quantity information of a welding module, determining the welding coordinate set of the welding module; obtaining the welding height corresponding to the welding coordinates in the welding coordinate set; the welding height being determined on the basis of the height distance between the ranging sensor 4022 and the terminal post corresponding to the welding coordinate collected by the ranging sensor 4022; on the basis of the welding coordinate set and the welding height corresponding to the welding coordinate, controlling the welding module 4021 to weld the terminal post of the battery; the welding mobile device 402 being used for receiving the welding coordinate set and the welding height corresponding to the welding coordinate, and welding the terminal post of the battery.

Referring to FIG. 21 again, the battery welding process device further comprises a visual acquisition system 4023 provided on the welding mobile device 402, the relative positional relationship between the welding module 4021, the ranging sensor 4022, and the visual acquisition system 4023 provided on the welding mobile device 402 remains unchanged, that is, the welding module 4021, the ranging sensor 4022, and the visual acquisition system 4023 are fixed on the welding mobile device 402. Therefore, the movement between the welding module 4021, the ranging sensor 4022, and the visual acquisition system 4023 is achieved by the movement of the welding mobile device 402. For example, when the visual center of the visual acquisition system 4023 coincides with the center of the terminal post and it needs to use the ranging sensor 4022 to measure the distance of the terminal post, the welding mobile device 402 can be controlled to move according to the distance between the visual acquisition system 4023 and the ranging sensor 4022 so that the center of the ranging sensor 4022 coincides with the center of the terminal post to implement distance measurement on the terminal post.

In some embodiments, the control device may be a PLC, and the welding mobile device may be a six-axis robot. The robot execution end is provided with a laser welding galvanometer (i.e., welding module), a laser ranging sensor (i.e., ranging sensor), and a CCD vision camera (i.e., visual acquisition system). The laser welding galvanometer, laser ranging sensor, and CCD vision camera on the robot execution end are movable. By changing the position of the laser welding galvanometer, laser ranging sensor, or CCD vision camera, the terminal post can be photographed, ranged, and welded.

It should be understood that references throughout the specification to "one embodiment" or "an embodiment" imply that specific features, structures, or characteristics related to the embodiment are included in at least one embodiment of the present disclosure. Thus, "in one embodiment" or "in an embodiment" that appears throughout the specification may not necessarily refer to the same embodiment. In addition, these specific features, structures, or characteristics may be combined in one or more embodiments in any suitable manner. It should be understood that in the various embodiments of the present disclosure, the size of the serial numbers of the above steps/processes does not imply the order of execution, and the execution order of each step/process should be determined by its function and internal logic, and should not constitute any limitations on the implementation process of the embodiment of the present disclosure. The above serial numbers of the embodiments of the present disclosure are only for description and do not represent the advantages and disadvantages of the embodiments.

It should be further noted that, herein, the term "include", "comprise" or other variations thereof are intended to cover non-exclusive including, so that a process, method, article, or apparatus including a series of elements not only includes the elements, but also includes other elements not clearly listed, or further includes inherent elements of the process, method, article, or apparatus. Without more limitations, elements defined by a statement "including one" do not exclude the existence of other identical elements in the process, method, item or apparatus that includes the said elements.

The foregoing descriptions are merely embodiments of the present application, but are not intended to limit the protection scope of the present application. Any variation or replacement readily figured out by those skilled in the art within the technical scope disclosed in the present application shall fall within the protection scope of the present application.

## Claims

1. A human-computer interaction control method for welding, comprising:
in response to triggering of a scheme switching control on a main menu bar, displaying a scheme switching interface on a human-computer interaction device, wherein the scheme switching interface comprises a scheme uploading control, a scheme uploading selection box, and a current scheme selection box;
on the basis of the scheme uploading selection box, determining, from a scheme uploading library, a target scheme to be uploaded, and displaying an identifier of the target scheme to be uploaded in the scheme uploading selection box;
when the target scheme to be uploaded has been determined and the scheme uploading control has been enabled, updating a current scheme corresponding to the current scheme selection box and displaying same as the target scheme; and
on the basis of working parameters of the target scheme, controlling a battery welding process device to perform welding work on a current battery to be welded.

2. The human-computer interaction control method for welding according to claim 1, wherein the scheme switching interface further comprises a scheme copying control and a scheme copying selection box, and the human-computer interaction control method for welding further comprises:
on the basis of the scheme copying selection box, determining a scheme identifier to be replaced from a target library to which a scheme is copied, and displaying the scheme identifier to be replaced in the scheme copying selection box; and
when the scheme identifier to be replaced has been displayed and the scheme copying control has been enabled, updating a scheme corresponding to the scheme identifier to be replaced to the current scheme.

3. The human-computer interaction control method for welding according to claim 1 or 2, further comprising:
during the welding process, displaying the working parameters of the battery welding process device on a monitoring interface, and
displaying an alarm result on an alarm information interface, wherein the alarm result indicates that the working parameter exceeds a corresponding welding operating parameter value.

4. The human-computer interaction control method for welding according to claim 3, further comprising:
in response to triggering of an operating parameter setting control on the main menu bar, displaying an operating parameter setting interface for the battery welding process device on the human-computer interaction device, wherein the welding parameters to be set in the operating parameter setting interface include at least one of the following: the allowable error of accuracy of a sensor, the cleaning parameters of a cleaning device, the allowable error of accuracy of a welding device, and the allowable error of accuracy of a driving device of the welding device; and
on the basis of the operating parameter setting interface, acquiring and storing the set welding operating parameter values.

5. The human-computer interaction control method for welding according to claim 4, further comprising:
in response to triggering of a weld point single-point compensation parameter setting control on the main menu bar, displaying a weld point single-point compensation interface on the human-computer interaction device, wherein the weld point single-point compensation interface comprises: at least one point display box for the welding device, and a scheme display box for displaying the current scheme identifier;
displaying or inputting a compensation value in at least one point display box for the welding device; and
on the basis of the compensation value, controlling the welding device to weld the corresponding point.

6. The human-computer interaction control method for welding according to claim 4 or 5, further comprising:
displaying at least one pagination control interface in a manual operation interface, wherein one of the pagination control interfaces comprises an adjustment control for the working parameter and a real-time display box for the working parameter; and
in response to the operation on the adjustment control for the working parameter, displaying the adjusted working parameter value in the real-time display box for the working parameter, and controlling the corresponding battery welding process device on the basis of the adjusted working parameter value.

7. The human-computer interaction control method for welding according to claim 6, further comprising:
in response to triggering of a manual operation control on the main menu bar, displaying a layout interface of the manual operation interface, the layout interface being used for displaying the layout of the battery welding process device and at least one jump control, the at least one jump control comprising: a jump control for the welding battery welding process device, a jump control for the rack safety signal, a jump control for the shutdown reason, and a jump control for the network topology; and
in response to a selection operation on the at least one jump control, entering the pagination control interface on the basis of the selected jump control.

8. The human-computer interaction control method for welding according to any one of claims 1 to 7, further comprising:
in response to triggering of an initialization selection control on the main menu bar, displaying an initialization pagination interface for the initialization selection control, the initialization selection control comprising: a selection control for whole machine initialization, and a selection control for welding device initialization; and
in response to a selection operation on the initialization selection control, on the basis of the selected initialization selection control, initializing the battery welding process device as a whole, or initializing the welding device.

9. The human-computer interaction control method for welding according to any one of claims 1 to 8, further comprising:
in response to triggering of a working mode control, displaying a working mode interface, wherein the working mode interface comprises a repair welding mode control, operating instructions, and a to-be-repair-welded-point selection box;
determining and displaying an identifier of a target point to be repair-welded on the basis of the to-be-repair-welded-point selection box; and
controlling the welding device to perform repair welding on the target point on the basis of the identifier of the target point to be repair-welded.

10. The human-computer interaction control method for welding according to claim 9, wherein:
the working mode interface further comprises a point selection layout diagram and an all-point selection confirmation completion control; and
when there is at least one target point, the human-computer interaction control method for welding further comprises:
each time after the identifier of the target point to be repair-welded is determined on the basis of the to-be-repair-welded-point selection box, displaying the position of the target point on the point selection layout diagram; and
when the all-point selection confirmation completion control is enabled, controlling the welding device to perform repair welding on the at least one target point on the basis of the identifier of the at least one target point.

11. The human-computer interaction control method for welding according to claim 10, wherein:
the working mode interface further comprises a point selection completion control, and the current state of the point selection completion control is distinguished by color; and
the human-computer interaction control method for welding further comprises:
after determining the identifier of the current target point to be repair-welded on the basis of the to-be repair-welded-point selection box, when the current state of the point selection completion control is a non-enabled state, displaying the position of the current target point to be repair-welded in a first color on the point selection layout diagram;
in response to triggering of the point selection completion control so that the current state of the point selection completion control is an enabled state, displaying the position of the target point in a second color on the point selection layout diagram, the first color being different from the second color; and
when the identifier of the next target point to be repair-welded is determined on the basis of the to-be repair-welded-point selection box, displaying the current state of the point selection completion control as a non-enabled state.

12. A human-computer interaction control system for welding, comprising:
a control device, used for:
in response to triggering of a scheme switching control on a main menu bar, displaying a scheme switching interface on a human-computer interaction device, wherein the scheme switching interface comprises a scheme uploading control, a scheme uploading selection box, and a current scheme selection box;
on the basis of the scheme uploading selection box, determining, from a scheme uploading library, a target scheme to be uploaded, and displaying an identifier of the target scheme to be uploaded in the scheme uploading selection box;
when the target scheme to be uploaded has been determined and the scheme uploading control has been enabled, updating a current scheme corresponding to the current scheme selection box and displaying same as the target scheme; and
on the basis of working parameters of the target scheme, controlling a battery welding process device to perform welding work on a current battery to be welded;
a human-computer interaction device, used for displaying a human-computer interaction interface; and
a battery welding process device, used for implementing measurement and welding operations on a battery to be welded.

13. The human-computer interaction control system for welding according to claim 12, wherein:
the scheme switching interface further comprises a scheme copying control and a scheme copying selection box;
the control device is used for, on the basis of the scheme copying selection box, determining a scheme identifier to be replaced from a target library to which a scheme is copied, and displaying the scheme identifier to be replaced in the scheme copying selection box; and
the control device is used for, when the scheme identifier to be replaced has been displayed and the scheme copying control has been enabled, updating a scheme corresponding to the scheme identifier to be replaced to the current scheme.

14. The human-computer interaction control system for welding according to claim 12 or 13, wherein:
the control device is used for, during the welding process, displaying the working parameters of the battery welding process device on a monitoring interface; and
the control device is used for displaying an alarm result on an alarm information interface, the alarm result indicating that the working parameter exceeds a corresponding welding operating parameter value.

15. The human-computer interaction control system for welding according to claim 14, wherein:
the control device is used for, in response to triggering of an operating parameter setting control on the main menu bar, displaying an operating parameter setting interface for the battery welding process device on the human-computer interaction device, wherein the welding parameters to be set in the operating parameter setting interface include at least one of the following: the allowable error of accuracy of a sensor, the cleaning parameters of a cleaning device, the allowable error of accuracy of a welding device, and the allowable error of accuracy of a driving device of the welding device; and
the control device is used for, on the basis of the operating parameter setting interface, acquiring and storing the set welding operating parameter values.

16. The human-computer interaction control system for welding according to claim 15, wherein:
the control device is used for, in response to triggering of a weld point single-point compensation parameter setting control on the main menu bar, displaying a weld point single-point compensation interface on the human-computer interaction device, wherein the weld point single-point compensation interface comprises: at least one point display box for the welding device, and a scheme display box for displaying the current scheme identifier; and
the control device is used for: displaying or inputting a compensation value in at least one point display box for the welding device; and on the basis of the compensation value, controlling the welding device to weld the corresponding point.

17. The human-computer interaction control system for welding according to claim 15 or 16, wherein:
the control device is used for displaying at least one pagination control interface in a manual operation interface, wherein one of the pagination control interfaces comprises an adjustment control for the working parameter and a real-time display box for the working parameter; and
the control device is used for, in response to the operation on the adjustment control for the working parameter, displaying the adjusted working parameter value in the real-time display box for the working parameter, and controlling the corresponding battery welding process device on the basis of the adjusted working parameter value.

18. The human-computer interaction control system for welding according to claim 17, wherein:
the control device is used for, in response to triggering of a manual operation control on the main menu bar, displaying a layout interface of the manual operation interface, the layout interface being used for displaying the layout of the battery welding process device and at least one jump control, the at least one jump control comprising: a jump control for the welding battery welding process device, a jump control for the rack safety signal, a jump control for the shutdown reason, and a jump control for the network topology; and
the control device is used for, in response to a selection operation on the at least one jump control, entering the pagination control interface on the basis of the selected jump control.

19. The human-computer interaction control system for welding according to any one of claims 12 to 18, wherein:
the control device is used for, in response to triggering of an initialization selection control on the main menu bar, displaying an initialization pagination interface for the initialization selection control, the initialization selection control comprising: a selection control for whole machine initialization, and a selection control for welding device initialization; and
the control device is used for, in response to a selection operation on the initialization selection control, on the basis of the selected initialization selection control, initializing the battery welding process device as a whole, or initializing the welding device.

20. The human-computer interaction control system for welding according to any one of claims 12 to 19, wherein:
the control device is used for, in response to triggering of a working mode control, displaying a working mode interface, the working mode interface comprising a repair welding mode control, operating instructions, and a to-be-repair-welded-point selection box;
the control device is used for determining and displaying an identifier of a target point to be repair-welded on the basis of the to-be-repair-welded-point selection box; and
the control device is used for controlling the welding device to perform repair welding on the target point on the basis of the identifier of the target point to be repair-welded.
